(19) Europäisches Patentamt
European Patent Office
Office européen des brevets

(11) **EP 2 044 334 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
*F15B 11/028* (2006.01)      *F15B 11/064* (2006.01)
*F15B 21/08* (2006.01)      *B29C 49/78* (2006.01)

(21) Anmeldenummer: 07702380.2

(22) Anmeldetag: **20.01.2007**

(86) Internationale Anmeldenummer:
**PCT/DE2007/000101**

(87) Internationale Veröffentlichungsnummer:
**WO 2007/104273 (20.09.2007 Gazette 2007/38)**

(54) **VERFAHREN UND VORRICHTUNG ZUR BLASFORMUNG VON BEHÄLTERN**

METHOD AND APPARATUS FOR BLOW-MOULDING CONTAINERS

PROCEDE ET DISPOSITIF DE FORMAGE DE RECIPIENTS PAR SOUFFLAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.03.2006 DE 102006011137**

(43) Veröffentlichungstag der Anmeldung:
**08.04.2009 Patentblatt 2009/15**

(73) Patentinhaber: **KHS Corpoplast GmbH
22145 Hamburg (DE)**

(72) Erfinder:
- **LINKE, Michael
  22047 Hamburg (DE)**
- **LITZENBERG, Michael
  21502 Geesthacht (DE)**

- **BERGER, Frank
  22885 Barsbüttel (DE)**
- **BAUMGARTE, Rolf
  22926 Ahrensburg (DE)**
- **LEWIN, Frank
  22889 Tangstedt (DE)**

(74) Vertreter: **Klickow, Hans-Henning et al
Patentanwälte
Hansmann-Klickow-Hansmann
Jessenstrasse 4
22767 Hamburg (DE)**

(56) Entgegenhaltungen:
**EP-A- 1 777 056      WO-A-2007/028493
JP-A- 58 167 889      JP-A- 2002 317 770**

**Beschreibung**

Die Erfindung betrifft ein Verfahren zur Blasformung von Behältern, bei dem ein Vorformling nach einer thermischen Konditionierung innerhalb einer Blasform einer Blasmaschine durch Blasdruckeinwirkung in den Behälter umgeformt wird sowie bei dem ein Blasgas von einem Kompressor bereitgestellt wird.

Die Erfindung betrifft darüber hinaus eine Vorrichtung zur Blasformung von Behältern, die mindestens eine Blasstation mit einer Blasform aufweist, sowie bei der die Blasstation mit einem Kompressor verbunden ist, der eine Kompressorsteuerung aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine Versorgung der Blasstation mit Blasgas, insbesondere mit Druckluft, erfolgt in der Regel über einen oder mehrere Kompressoren. Typischerweise ist der verwendete Kompressor mit einer Kompressorsteuerung versehen und zwischen dem Kompressor und der Blasmaschine ist ein Druckluftspeicher installiert. Die Kompressorsteuerung steuert den Kompressor derart, daß ein vorgegebenes Druckniveau im Bereich des Druckluftspeichers eingehalten wird. Typischerweise ist die Kompressorsteuerung derart eingestellt, daß im Bereich des Druckluftspeichers ein Druckniveau von etwa 38 bar bereitgestellt wird. Die Blasmaschine ist mit einer Drucksteuereinrichtung versehen, die den vom Druckluftspeicher bereitgestellten Druck auf ein konkret zur Formung des Behälters benötigtes Druckniveau reduziert.

Typischerweise werden auf üblichen Blasmaschinen Flaschen mit sehr unterschiedlichen Größen geblasen. Die Volumeninhalte der geblasenen Flaschen schwanken in einem Bereich von 0,15 bis 3,0 Liter. In Abhängigkeit vom jeweiligen Flaschenvolumen und der vorgesehenen Flaschengeometrie variieren auch die zur Behälterformung verwendeten Blasdrücke relativ stark. Ein typischer Blasdruck liegt im Bereich zwischen 22 bis 38 bar.

Ein wesentlicher Anteil der laufenden Betriebskosten für die blastechnische Herstellung der Behälter resultiert aus der Bereitstellung der erforderlichen Blasluft. Zur Reduzierung dieser Kosten ist es beispielsweise bekannt, die verwendete Blasluft mehrfach zu verwenden und verbrauchte Blasluft eines hohen Druckniveaus auf einem niedrigeren Druckniveau erneut der Behälterformung zuzuführen. Da ein derartiges Recycling von Blasluft nicht in jedem Fall umfangreich einsetzbar ist, können allein durch die Realisierung eines derartigen Recycling die Anforderungen an eine deutliche Reduzierung der Betriebskosten noch nicht in völlig zufriedenstellender Weise erfüllt werden.

Aus der JP 2002317770A ist es bereits bekannt, eine Mehrzahl von Kompressoren zur Versorgung einer Mehrzahl von Blasmaschinen miteinander zu koppeln. In Abhängigkeit von einer benötigten Blasluftmenge werden die Kompressoren mit einem vorgebbaren Leistungsfaktor betrieben.

In der JP 58167889 A wird ebenfalls eine Kopplung einer Mehrzahl von Kompressoren zur Versorgung einer Mehrzahl von pneumatischen Verbrauchern beschrieben. Als Indikator für eine konkrete verbrauchsmenge an Druckluft wird der Druck in einem Zwischenspeicher überwacht. Bei einer Druckabsenkung werden die Kompressoren hochgefahren, bei einem verminderten Druckluftverbrauch erfolgt ein Herunterfahren der Kompressoren.

Aufgabe der vorliegenden Erfindung ist es, ein verfahren der einleitend genannten Art derart zu verbessern, daß eine Reduzierung der Betriebskosten unterstützt wird.

Diese Aufgabe wird erfindungsgemäß dadurch gelöst, daß eine Kompressorsteuerung mit einer Steuerung der Blasmaschine derart verbunden wird, daß die Steuerung der Blasmaschine einen Sollwert für den vom Kompressor bereitgestellten Ausgangsdruck generiert und daß ein Ausgangsdruck des Kompressors durch die Addition eines von der Blasmaschine benötigten Blasdruckes und eines zusätzlichen Differenzdruckes bestimmt wird.

Weitere Aufgabe der vorliegenden Erfindung ist es, eine Vorrichtung der einleitend genannten Art derart zu konstruieren, daß verringerte Betriebskosten erreicht werden.

Diese Aufgabe wird erfindungsgemäß dadurch gelöst, daß die Kompressorsteuerung mit einer Steuerung der Blasmaschine verbunden ist und daß ein Ausgang der Steuerung der Blasmaschine an einen Sollwerteingang der Kompressorsteuerung angeschlossen ist und daß die Steuerung eine Berechnungseinheit zur Ermittlung eines erforderlichen Ausgangsdruckes des Kompressors durch Addition eines konkreten Blasdrukkes und eines Differenzdruckes aufweist.

Durch die Kopplung der Kompressorsteuerung mit der Steuerung der Blasmaschine ist es möglich, den Kompressor energetisch optimal zu betreiben. Der Ausgangsdruck des Kompressors wird hierdurch nicht auf ein unnötig hohes Niveau gesteigert, das anschließend wieder reduziert wird, sondern der Kompressor generiert lediglich das für den jeweiligen Anwendungsfall erforderliche Druckniveau.

Durch die Kopplung der Kompressorsteuerung und der Steuerung der Blasmaschine wird ein verbundsystem zwischen der Blasmaschine und der Kompressoranlage bereitgestellt, daß die elektrische Leistungsaufnahme der Kompressoranlage reduziert und hierdurch zu einer Betriebskosteneinsparung führt.

Zur Berücksichtigung unterschiedlicher Anwendungsanforderungen ist vorgesehen, daß der Kompressor in Abhän-Weiter auf Seite 6 der Ursprungsunterlagen gigkeit von der Kompressorsteuerung mit unterschiedlichen vorgebbaren Ausgangsdrücken betrieben wird. Geringe zeitliche Verzögerungen bei einem Produktionsstart der Blasmaschine können dadurch erreicht werden, daß die Kompressorsteuerung ohne Vorgabe eines Sollwertes durch die Steuerung der Blasmaschine den Kompressor zur Generierung eines maximal vorgesehenen Ausgangsdruckes ansteuert.

Zur Bereitstellung der erforderlichen Kommunikationswege wird vorgeschlagen, daß eine Kopplung zwischen der Blasmaschine und dem Kompressor mindestens eine unidirektionale Datenübertragung durchführt. Vorteilhaft ist auch eine bidirektionale Datenübertragung.

Ein geringer Implementierungsaufwand wird dadurch unterstützt, daß Sollwertvorgaben für den vom Kompressor zu generierenden Ausgangsdruck über ein Bedienprogramm der Blasmaschine vorgegeben werden.

Eine Berücksichtigung technisch bedingter Druckverluste erfolgt dadurch, daß ein Ausgangsdruck des Kompressors durch die Addition eines von der Blasmaschine benötigten Blasdruckes und eines zusätzlichen Differenzdruckes bestimmt wird.

Insbesondere ist daran gedacht, daß der Differenzdruck durch die Summierung eines Differenzdruckes eines Druckreglers der Blasmaschine, Druckverlusten der verbindungsleitungen sowie einer Hysterese der Kompressorsteuerung ermittelt wird.

Gemäß einer Ausführungsvariante ist daran gedacht, daß mindestens zwei Blasmaschinen an mindestens einen Kompressor angeschlossen werden.

Ebenfalls ist es möglich, daß mindestens zwei Kompressoren an mindestens eine Blasmaschine angeschlossen werden.

Zur Bereitstellung eines stabilen Versorgungsdruckes bei zeitlich variierenden Verbrauchsmengen an Druckluft wird vorgeschlagen, daß mindestens ein Teil der vom Kompressor bereitgestellten Druckluft von einem Druckspeicher gespeichert wird.

In den Zeichnungen sind Ausführungsbeispiele der Erfindung schematisch dargestellt. Es zeigen:

Fig. 1 Eine- perspektivische Darstellung einer Blasstation zur Herstellung von Behältern aus Vorformlingen,

Fig. 2 einen Längsschnitt durch eine Blasform, in der ein Vorformling gereckt und expandiert wird,

Fig. 3 eine Skizze zur veranschaulichung eines grund- sätzlichen Aufbaus einer Vorrichtung zur Blas- formung von Behältern,

Fig. 4 eine modifizierte Heizstrecke mit vergrößerter Heizkapazität,

Fig. 5 ein Blockschaltbild zur Veranschaulichung einer Gesamtanlage aus Kompressor, Druckspeicher und Blasmaschine,

Fig. 6 eine gegenüber der Darstellung in Fig. 5 modifizierte Darstellung und

Fig. 7 eine Darstellung zur Veranschaulichung eines Systems aus mehreren Kompressoren und mehreren Blasmaschinen.

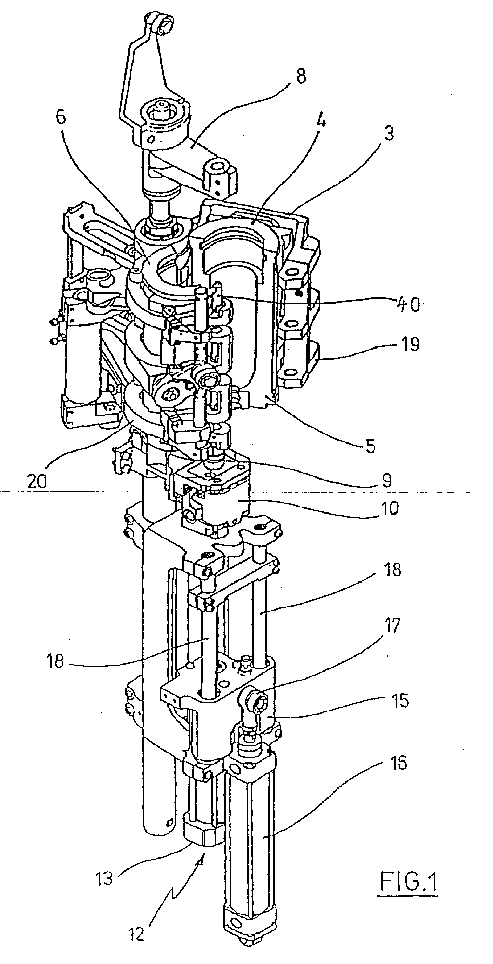

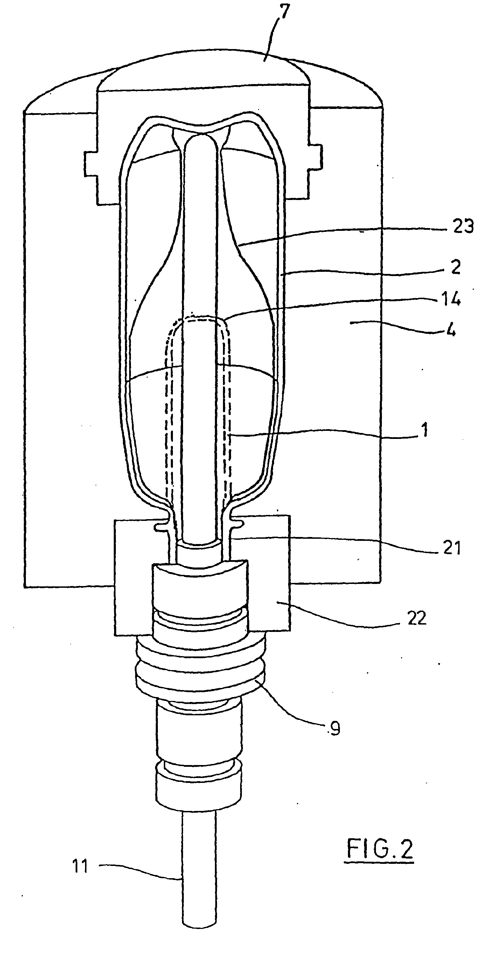

Der prinzipielle Aufbau einer Vorrichtung zur Umformung von vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

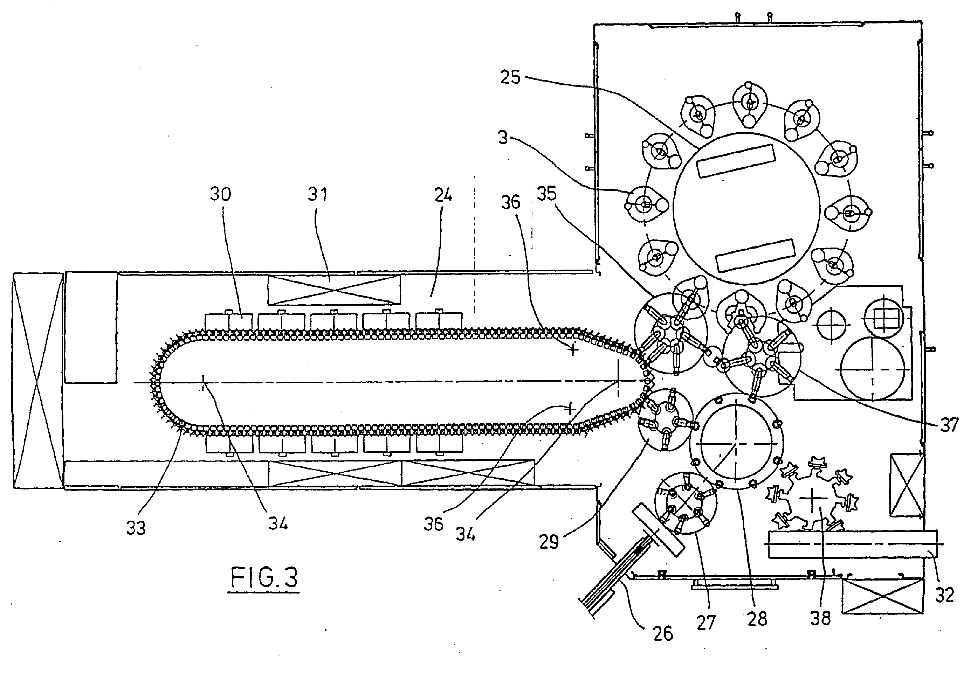

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Haupt-blasphase unterteilt, in der Gas mit einem höheren Druck-niveau zugeführt wird. Während der vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heiz-strecke (24) und das größere Umlenkrad (34) im unmittel-baren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

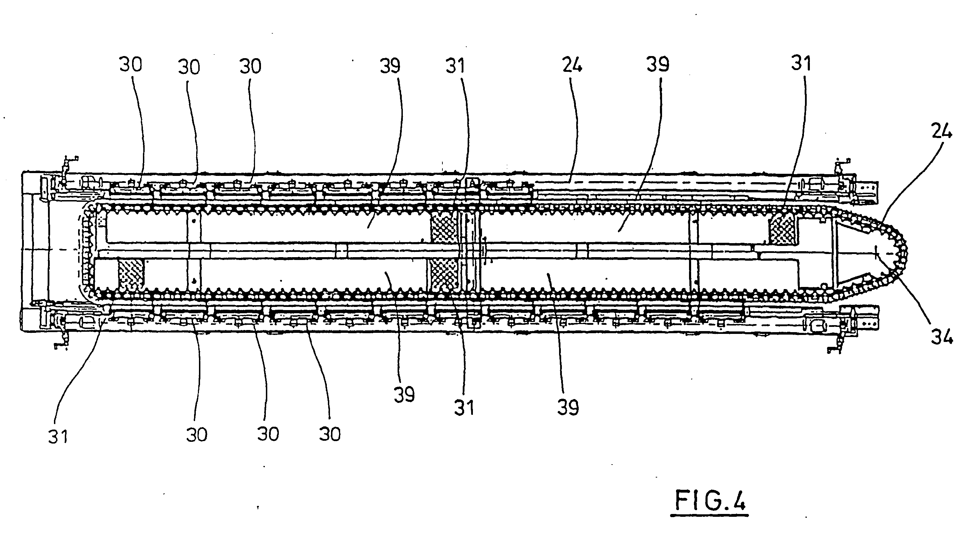

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

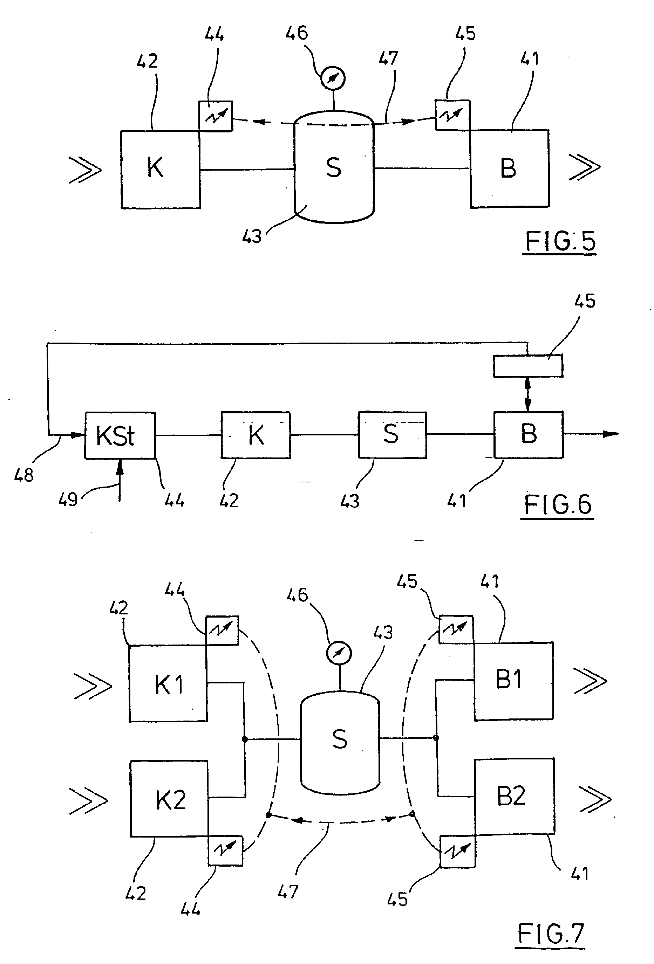

Fig. 5 veranschaulicht schematisch die Versorgung einer Blasmaschine (41) mit Druckluft unter Verwendung eines Kompressors (42) sowie eines Druckspeichers (43). Der Druckspeicher (43) ist typischerweise als ein Kessel ausgebildet. Der Kompressor (42) weist eine Kompressorsteuerung (44) auf und die Blasmaschine (41) ist mit einer Steuerung (45) versehen. Der Druckspeicher (43) ist mit einer Druckmeßeinrichtung (46) versehen, die einen Istwert für den vom Kompressor (42) bereitgestellten Ausgangsdruck an die Kompressorsteuerung (44) liefert.

Die Kompressorsteuerung (44) und die Steuerung (45) der Blasmaschine (41) sind über eine Kopplung (47) miteinander verbunden. Die Kopplung (47) kann in Abhängigkeit von den jeweiligen Anwendungsanforderungen einen unidirektionalen oder einen bidirektionalen Datentransfer unterstützen. Technisch kann die Kopplung (47) in unterschiedlichen varianten realisiert werden. Beispielsweise ist an eine kabelgebundene Verbindung oder eine drahtlose Verbindung gedacht. Bei einer kabelgebundenen Verbindung kann der Datentransfer beispielsweise elektrisch oder optisch erfolgen. Drahtlose Verbindungen können über Funkstrecken, Infrarotstrecken oder andere berührungslos Kommunikationswege bereitgestellt werden.

Aus der gegenüber Fig. 5 abgewandelten Darstellung in Fig. 6 ist erkennbar, daß die Steuerung (45) der Blasmaschine (41) einen Vorgabewert für die Kompressorsteuerung (44) im Bereich eines Sollwerteinganges (48) bereitstellt. Die Kompressorsteuerung (44) weist darüber hinaus eine Eingabe (49) für einen Basissollwert auf. Der Sollwerteingang (48) und die Eingabe (49) können mit einer Prioritätsteuerung verknüpft sein. Dies bedeutet, daß der Kompressor bei Vorliegen eines Führungswertes von der Blasmaschine (41) diesen als Sollwert berücksichtigt, bei Fehlen eines derartigen externen Steuerwertes aber den von der Eingabe (49) bereitgestellten Sollwert berücksichtigt.

Unter Berücksichtigung der vorstehend skizzierten Prioritätensteuerung ist es beispielsweise möglich, ohne eingeschaltete Blasmaschine (41) im Bereich des Druckspeichers (43) einen Grunddruck bereitzustellen. Dies kann beispielsweise der maximale vom Kompressor generierte Ausgangsdruck, beispielsweise ein Druck von 38 bar sein. Hierdurch ist gewährleistet, daß unabhängig von einem konkret von der Blasmaschine (41) benötigten Blasdruck ohne zeitverzögerung der benötigte Blasdruck bereitgestellt wird. Nach einem Einschalten der Blasmaschine (41) liegt dann ein Sollwert für den tatsächlich benötigten Blasdruck am Sollwerteingang (48) an und der Kompressor (42) stellt einen zugeordneten Ausgangsdruck im Bereich des Druckspeichers (43) bereit.

Für eine optimierte Steuerung des Kompressors (42) wird berücksichtigt, daß nicht der volle vom Kompressor (42) bereitgestellte Ausgangsdruck den Blasstationen (3) zugeführt wird, sondern daß mit Druckverlusten zu rechnen ist. Vorteilhafterweise stellt der Kompressor (42) deshalb den tatsächlich von den Blasstationen (3) benötigten Blasdruck zuzüglich eines Differenzdruckes bereit. Ein Lieferdruck $P_{K-S}$ im Kompressorspeichersystem kann durch die Auswertung der folgenden Formel bestimmt werden:

$$P_{K-S} = P_{Bd} + \Delta P_{Br} + \Delta P_{DV} + \Delta P_{K-S-H}$$

hierin sind:

$P_{Bd}$ =        Blasdruck, der in der Maschine benötig

wird.

$\Delta P_{Br}$ = Druckdifferenz, die der Blasdruckregler an der Blasmaschine für eine Regelung benötigt.

$\Delta P_{DV}$ = Druckverluste durch Strömung zwischen Speicher und Blasdruckregler.

$\Delta P_{K\text{-}S\text{-}H}$ = Kompressor-Speichersystem-Hysterese, die sich durch die Zu- und Abschaltdrücke des Kompres- sors ergibt.

Eine Auswertung der vorstehenden Formel wird am nachfolgenden Beispiel erläutert. Es ergibt sich hieraus, wie die Bedarfssteuerung der Druckluft sich auf den Speicherdruck und somit auch auf die Leistungsaufnahme des Kompressors auswirkt.

|  |  | Flasche A | Flasche B |
|---|---|---|---|
| $P_{Bd}$ | = | 36 bar | 24 bar |
| $\Delta P_{B\rho}$ | = | 2 bar | 2 bar |
| $\Delta P_{\Delta\varsigma}$ | = | 0 , 5 bar | 0 , 5 bar |
| $\Delta P_{K-\Sigma-H}$ | = | 1 bar | 1 bar |
| $P_{K\text{-}S}$ | = | 39,5 bar | 2 7 , 5 bar |

Die Auswertung der vorstehenden Tabelle ergibt, daß bei einer blastechnischen Herstellung der Flasche (B) statt der Flasche (A) ein um etwa 12 bar niedrigerer Ausgangsdruck des Kompressors (42) benötigt wird. Durch die Reduzierung des Ausgangsdruckes des Kompressors braucht dieser die bereitgestellte Luft nicht auf das unnötig hohe Druckniveau zu verdichten. Bei typischen Druckluftverbräuchen von etwa 1000 bis 3000 Normkubikmetern je Stunde ergibt sich hieraus ein erhebliches Energieeinsparpotential.

Fig. 7 zeigt eine komplexere Produktionsanlage, die aus zwei Kompressoren (42) und zwei Blasmaschinen (41) besteht, die über einen gemeinsamen Druckspeicher (43) miteinander gekoppelt sind. Die beiden Kompressoren (42) werden bei einer derartigen Anordnung vorzugsweise mit gleichen Sollwerten betrieben. Die Blasmaschinen (41) stellen jeweils Sollwerte für die Kompressorsteuerung (44) bereit, die aus den individuell zu produzierenden Behältern (42) resultieren. Die Kompressorsteuerung (44) stellt das höhere der benötigten Druckniveaus zur verfügung.

Grundsätzlich können in Abhängigkeit von den konkreten Anwendungsanforderungen beliebige Anzahlen von Kompressoren (42) und Blasmaschinen (21) miteinander gekoppelt werden. Es ist dabei lediglich dafür Sorge zu tragen, daß der benötigte Gesamtbedarf an Druckluft der Blasmaschinen (41) von den Kompressoren (42) bereitgestellt wird und daß die den höchsten Blasdruck benötigende Blasmaschine (41) mit mindestens diesem Druckniveau versorgt wird.

Typischerweise umfaßt die Steuerung (45) der Blasmaschine (41) eine Bedieneinrichtung, die eine Abspeicherung und Veränderung vorgegebener Rezepturen für die Herstellung der Behälter (3) umfaßt. Die Rezepturen enthalten als einen Produktionsparameter den erforderlichen Blasdruck. In Abhängigkeit von diesem Blasdruckparameter wird eine Druckregeleinrichtung der Blasmaschine (41) gesteuert. Dieser Blasdruckparameter kann somit ohne wesentlichen Aufwand auch der Kompressorsteuerung (44) zur Verfügung gestellt werden. Der konkret erforderliche Differenzdruck, um den der Ausgangsdruck des Kompressors (42) höher als der konkret benötigte Blasdruck zu sein hat, kann sowohl im Bereich der Steuerung (45) der Blasmaschine (41) als auch im Bereich der Kompressorsteuerung (44) berechnet werden. Bevorzugt erfolgt die Berechnung im Bereich der Steuerung (45) der Blasmaschine (41), da hier alle erforderlichen Informationen verfügbar sind und Modifikationen der Kompressorsteuerung (44) vermieden werden.

**Patentansprüche**

1. Verfahren zur Blasformung von Behältern (2), bei dem ein vorformling (1) nach einer thermischen Konditionierung innerhalb einer Blasform (4) einer Blasmaschine durch Blasdruckeinwirkung in den Behälter (2) umgeformt wird sowie bei dem Blasgas von einem Kompressor (42) bereitgestellt wird, **dadurch gekennzeichnet, daß** eine Kompressorsteuerung (44) mit einer Steuerung (45) der Blasmaschine (41) derart verbunden wird, daß die Steuerung (45) der Blasmaschine (41) einen Sollwert für den vom Kompressor (42) bereitgestellten Ausgangsdruck generiert und daß ein Ausgangsdruck des Kompressors (42) durch die Addition eines von der Blasmaschine (41) benötigten Blasdruckes und eines zusätzlichen Differenzdruckes bestimmt wird.

2. Verfahren nach Anspruch 1, **dadurch gekennzeichnet, daß** der Kompressor (42) in Abhängigkeit von der Kompressorsteuerung (44) mit unterschiedlichen vorgebbaren Ausgangsdrücken betrieben wird.

3. Verfahren nach Anspruch 1 oder 2, **dadurch gekennzeichnet, daß** die Kompressorsteuerung (44) ohne Vorgabe eines Sollwertes durch die Steuerung (45) der Blasmaschine (41) den Kompressor (42) zur Generierung eines maximal vorgesehenen Ausgangsdrukkes ansteuert.

4. Verfahren nach einem der Ansprüche 1 bis 3, **dadurch gekennzeichnet, daß** eine Kopplung (47) zwischen der Blasmaschine (41) und dem Kompressor (42) mindestens eine unidirektionale Datenübertragung durchführt.

5. Verfahren nach einem der Ansprüche 1 bis 4, **dadurch gekennzeichnet, daß** Sollwertvorgaben für den vom Kompressor (42) zu generierenden Ausgangsdruck über ein Bedienprogramm der Blasmaschine (41) vorgegeben werden.

6. Verfahren nach einem der Ansprüche 1 bis 5, **dadurch gekennzeichnet, daß** der Differenzdruck durch die Summierung eines Differenzdruckes eines Druckreglers der Blasmaschine, Druckverlusten der Verbindungsleitungen sowie einer Hysterese der Kompressorsteuerung (44) ermittelt wird.

7. Verfahren nach einem der Ansprüche 1 bis 6, **dadurch gekennzeichnet, daß** mindestens zwei Blasmaschinen (41) an mindestens einen Kompressor (42) angeschlossen werden.

8. Verfahren nach einem der Ansprüche 1 bis 6, **dadurch gekennzeichnet, daß** mindestens zwei Kompressoren (42) an mindestens eine Blasmaschine (41) angeschlossen werden.

9. Verfahren nach einem der Ansprüche 1 bis 8, **dadurch gekennzeichnet, daß** mindestens ein Teil der vom Kompressor (42) bereitgestellten Druckluft von einem Druckspeicher (43) gespeichert wird.

10. Vorrichtung zur Blasformung von Behältern (2), die mindestens eine Blasstation mit einer Blasform (4) aufweist, sowie bei die Blasstation mit einem Kompressor (42) verbunden ist, der eine Kompressorsteuerung (44) aufweist, **dadurch gekennzeichnet, daß** die Kompressorsteuerung (44) mit einer Steuerung (45) der Blasmaschine (41) verbunden ist und daß ein Ausgang der Steuerung (45) der Blasmaschine (41) an einen Sollwerteingang (48) der Kompressorsteuerung (44) angeschlossen ist und daß die Steuerung (45) eine Berechnungseinheit zur Ermittlung eines erforderlichen Ausgangsdruckes des Kompressors (42) durch Addition eines konkreten Blasdruckes und eines Differenzdruckes aufweist

11. Vorrichtung nach Anspruch 10, **dadurch gekennzeichnet, daß** die Kompressorsteuerung (44) zur Vorgabe unterschiedlicher Ausgangsdrücke des Kompressors (42) ausgebildet ist.

12. Vorrichtung nach Anspruch 10 oder 11, **dadurch gekennzeichnet, daß** die Kompressorsteuerung (44) eine hinsichtlich der Bearbeitungspriorität dem Sollwerteingang (48) nachgeordnete Eingabe (49) für einen Basissollwert aufweist.

13. Vorrichtung nach einem der Ansprüche 10 bis 12, **dadurch gekennzeichnet, daß** eine Kopplung (47) zwischen der Blasmaschine (41) und dem Kompressor (42) mindestens zur Durchführung einer unidirektionalen Datenübertragung ausgebildet ist.

14. Vorrichtung nach einem der Ansprüche 10 bis 13, **dadurch gekennzeichnet, daß** die Steuerung (45) der Blasmaschine (41) ein Bedienprogramm zur Vorgabe von Sollwerten für einen konkreten Blasdruck aufweist.

15. Vorrichtung nach einem der Ansprüche 10 bis 14, **dadurch gekennzeichnet, daß** die Recheneinheit zur Bildung des Differenzdruckes aus einem Differenzdruck des Blasdruckreglers, Druckverlusten entlang der Strömungswege sowie einer Reglerhysterese des Kompressors (42) ausgebildet ist.

16. Vorrichtung nach einem der Ansprüche 10 bis 15, **dadurch gekennzeichnet, daß** mindestens zwei Blasmaschinen (41) an mindestens einen Kompressor (42) angeschlossen sind.

17. vorrichtung nach einem der Ansprüche 10 bis 16, **dadurch gekennzeichnet, daß** mindestens zwei Kompressoren (42) an mindestens eine Blasmaschine (41) angeschlossen sind.

18. Vorrichtung nach einem der Ansprüche 10 bis 17, **dadurch gekennzeichnet, daß** eine den Kompressor (42) mit der Blasmaschine (41) verbindende Druckluftkopplung mindestens einen Druckspeicher (43) aufweist.

**Claims**

1. A process for blow moulding containers (2), in which a preform (1) is formed into the container (2) under the action of blowing pressure following thermal conditioning within a blowing mould (4) of a blow-moulding machine, and in which blowing gas is provided by a compressor (42), **characterised in that** a compressor control (44) is connected to a control (45) of the blow-moulding machine (41) in such a way that the control (45) of the blow-moulding machine (41) generates a set value for the output pressure provided by the compressor (42) and an output pressure of the compressor (42) is determined by the addition of a blowing pressure required by the blow-moulding machine (41) and an additional differential pressure.

2. A process according to Claim 1, **characterised in that** the compressor (42) is operated with different presettable output pressures according to the compressor control (44).

3. A process according to Claim 1 or 2, **characterised**

**in that** the compressor control (44) activates the compressor (42) to generate a maximum stipulated output pressure without specifying a set value by means of the control (45) of the blow-moulding machine (41).

4. A process according to one of Claims 1 to 3, **characterised in that** a coupling (47) between the blow-moulding machine (41) and the compressor (42) effects at least a unidirectional data transfer.

5. A process according to one of Claims 1 to 4, **characterised in that** specified set-values for the output pressure to be generated by the compressor (42) are preset by way of an operating program of the blow-moulding machine (41).

6. A process according to one of Claims 1 to 5, **characterised in that** the differential pressure is determined by the summation of a differential pressure of a pressure regulator of the blow-moulding machine, pressure losses of the connecting lines and a hysteresis of the compressor control (44).

7. A process according to one of Claims 1 to 6, **characterised in that** at least two blow-moulding machines (41) are connected to at least one compressor (42).

8. A process according to one of Claims 1 to 6, **characterised in that** at least two compressors (42) are connected to at least one blow-moulding machine (41).

9. A process according to one of Claims 1 to 8, **characterised in that** at least a portion of the compressed air provided by the compressor (42) is stored in a pressure reservoir (43).

10. A device for blow moulding containers (2), which has at least one blowing station with a blowing mould (4) and in which the blowing station is connected to a compressor (42) which has a compressor control (44), **characterised in that** the compressor control (44) is connected to a control (45) of the blow-moulding machine (41), and **in that** an output of the control (45) of the blow-moulding machine (41) is connected to a set-value input (48) of the compressor control (44), and **in that** the control (45) has a processing unit for determining a necessary output pressure of the compressor (42) from the addition of a concrete blowing pressure and a differential pressure.

11. A device according to Claim 10, **characterised in that** the compressor control (44) is designed for presetting different output pressures of the compressor (42).

12. A device according to Claim 10 or 11, **characterised in that** the compressor control (44) has an input (29) for a base set value, which is subordinate to the set-value input (48) in terms of the processing priority.

13. A device according to one of Claims 10 to 12, **characterised in that** a coupling (47) between the blow-moulding machine (41) and the compressor (42) is designed at least for effecting a unidirectional data transfer.

14. A device according to one of Claims 10 to 13, **characterised in that** the control (45) of the blow-moulding machine (41) has an operating program for specifying set values for a concrete blowing pressure.

15. A device according to one of Claims 10 to 14, **characterised in that** the processing unit is designed for forming the differential pressure from a differential pressure of the blowing pressure regulator, pressure losses along the flow paths and a regulator hysteresis of the compressor (42).

16. A device according to one of Claims 10 to 15, **characterised in that** at least two blow-moulding machines (41) are connected to at least one compressor (42).

17. A device according to one of Claims 10 to 16, **characterised in that** at least two compressors (42) are connected to at least one blow-moulding machine (41).

18. A device according to one of Claims 10 to 17, **characterised in that** a compressed-air coupling connecting the compressor (42) to the blow-moulding machine (41) has at least one pressure reservoir (43).

**Revendications**

1. Procédé pour le formage par soufflage de récipients (2), dans lequel une préforme (1), après un conditionnement thermique à l'intérieur d'un moule de soufflage (4) d'une machine de soufflage, est transformée en un récipient (2) sous l'effet d'une pression de soufflage, ainsi que dans lequel le gaz de soufflage est mis à disposition par un compresseur (42), **caractérisé en ce qu'**une commande (44) du compresseur est reliée à une commande (45) de la machine de soufflage (41) de sorte que la commande (45) de la machine de soufflage (41) génère une valeur de consigne pour la pression de sortie délivrée par le compresseur (42), et qu'une pression de sortie du compresseur (42) soit déterminée par l'addition d'une pression de soufflage, exigée par la machine de soufflage (41), et une pression de différence supplémentaire.

2. Procédé selon la revendication 1, **caractérisé en ce que** le compresseur (42) est exploité avec des pressions différentes, qui peuvent être prédéterminées en fonction de la commande (44) du compresseur.

3. Procédé selon revendication 1 ou 2, **caractérisé en ce que** la commande (44) du compresseur, sans valeur de consigne prédéterminée par commande (45) de la machine de soufflage (41), excite le compresseur (42) à générer une pression de sortie impartie au maximum.

4. Procédé selon l'une des revendications 1 à 3, **caractérisé en ce qu'**un système de couplage (47) entre la machine de soufflage (41) et le compresseur (42) exécute au moins une transmission de données unidirectionnelle.

5. Procédé selon l'une des revendications 1 à 4, **caractérisé en ce que** les valeurs de consigne relatives à la pression de sortie devant être générée par le compresseur (42), sont prédéterminées par l'intermédiaire d'un programme de commande de la machine de soufflage (41).

6. Procédé selon l'une des revendications 1 à 5, **caractérisé en ce que** la pression de différence est déterminée par la sommation d'une pression de différence d'un régleur de pression de la machine de soufflage, de fuites de pression des conduites de raccordement, ainsi que d'une hystérèse de la commande (44) du compresseur.

7. Procédé selon l'une des revendications 1 à 6, **caractérisé en ce que** deux machines de soufflage (41) au moins sont raccordées à au moins un compresseur (42).

8. Procédé selon l'une des revendications 1 à 6, **caractérisé en ce que** deux compresseurs (42) au moins sont raccordés à au moins une machine de soufflage (41).

9. Procédé selon l'une des revendications 1 à 8, **caractérisé en ce qu'**au moins une partie de l'air comprimé, délivré par le compresseur (42), est stockée dans un accumulateur de pression (43).

10. Dispositif pour le formage par soufflage de récipients (2), qui présente au moins une station de soufflage avec un moule de soufflage (4), et dans lequel la station de soufflage (3) est raccordée à un compresseur (42), qui est doté d'une commande (44), **caractérisé en ce que** la commande (44) du compresseur est reliée à une commande (45) de la machine de soufflage (41) et qu'une sortie de la commande (45) de la machine de soufflage (41) est raccordée à un système d'entrée de données de consigne (48) de la commande (44) du compresseur, et **en ce que** la commande (45) est dotée d'une unité de calcul pour déterminer, par addition d'une pression de soufflage concrète et d'une pression de différence, la pression de sortie du compresseur (42) nécessitée.

11. Dispositif selon la revendication 10, **caractérisé en ce que** la commande (44) du compresseur est conçue pour la détermination de différentes pressions de sortie du compresseur (42).

12. Dispositif selon revendication 10 ou 11, **caractérisé en ce que** la commande (44) du compresseur est dotée d'une entrée (49) pour une valeur de consigne de base, laquelle entrée est située en aval de l'entrée des données de consigne (48) concernant la priorité de traitement .

13. Dispositif selon l'une des revendications 10 à 12, **caractérisé en ce qu'**un couplage (47) entre la machine de soufflage (41) et le compresseur (42) est conçu au moins pour l'exécution d'une transmission de données unidirectionnelle.

14. Dispositif selon l'une des revendications 10 à 13, **caractérisé en ce que** la commande (45) de la machine de soufflage (41) est dotée d'un programme de commande pour la détermination de valeurs de consigne pour une pression de soufflage concrète.

15. Dispositif selon l'une des revendications 10 à 14, **caractérisé en ce que** l'unité de calcul est conçue pour la formation d'une pression de différence à partir d'une pression de différence du régleur de pression de soufflage, de fuites de pression le long de la voie d'écoulement, ainsi que d'une hystérèse de réglage du compresseur (42).

16. Dispositif selon l'une des revendications 10 à 15, **caractérisé en ce que** deux machines de soufflage (41) au moins sont raccordées à au moins un compresseur (42).

17. Dispositif selon l'une des revendications 10 à 16, **caractérisé en ce que** deux compresseurs (42) au moins sont raccordés à au moins une machine de soufflage (41).

18. Dispositif selon l'une des revendications 10 à 17, **caractérisé en ce qu'**un couplage d'air comprimé, qui relie le compresseur (42) à la machine de soufflage (41), est doté d'au moins un accumulateur de pression (43).

FIG.1

7

23

2

14

4

1

21

22

9

11

FIG.2

FIG.3

FIG.4

EP 2 044 334 B1

FIG.5

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS4340291 A
- DE OS4212583 A
- DE OS2352926 A
- DE OS19906438 A
- JP 2002317770 A
- JP 58167889 A